Europäisches Patentamt

European Patent Office

Office européen des brevets

(19)

(11) **EP 1 536 255 A1**

(12) **EUROPEAN PATENT APPLICATION**

(43) Date of publication:
**01.06.2005 Bulletin 2005/22**

(51) Int Cl.7: **G02B 6/16**, B29D 11/00, C03B 37/02

(21) Application number: **04017182.9**

(22) Date of filing: **21.07.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **26.11.2003 KR 2003084443**

(71) Applicant: **Samsung Electronics Co., Ltd.**
**Suwon-si, Gyeonggi-do 442-742 (KR)**

(72) Inventors:
• **Lee, Seung-Hui**
**Yeongtong-gu Suwon-si Gyeonggi-do (KR)**
• **Oh, Sung-Koog**
**Yeongtong-gu Suwon-si Gyeonggi-do (KR)**

(74) Representative: **Lang, Johannes, Dipl.-Ing.**
**Bardehle Pagenberg Dost Altenburg Geissler,**
**Postfach 86 06 20**
**81633 München (DE)**

(54) **Apparatus and method for fabricating plastic optical fiber**

(57)    An apparatus and method for fabricating a plastic optical fiber are disclosed. In the fabricating apparatus, a first container (120) is provided to separately contain the refractive index control materials including at least a core material. The refractive control materials have different refractive indexes. A second container (130) contains a clad material having a different refractive index from the core material. A crosshead (140) flows down the refractive index control materials and the clad material introduced from the first and second containers by physical extrusion, while restricting the flow of the refractive index control materials and clad materials to a predetermined radius. A rotator (150) mixes the extruded refractive index control and clad materials concentrically in perpendicular to an extrusion direction.

100

FIG.2

**Description**

CLAIM OF PRIORITY

This application claims priority under 35 U.S.C. § 119 to an application entitled "Apparatus and Method for Fabricating Plastic Optical Fiber," filed in the Korean Intellectual Property Office on November 26, 2003 and assigned Serial No. 2003-84443, the contents of which are incorporated herein by reference.

BACKGROUND OF THE INVENTION

1. Field of the Invention

The present invention relates generally to an optical fiber, and in particular, to an apparatus and method for fabricating a plastic optical fiber having a continuous refractive index distribution in a radius direction from the center of the optical fiber.

2. Description of the Related Art

Optical fibers used for communication applications are divided into a single-mode fiber and a multi-mode fiber depending on to the optical signal transfer mechanism. The widely used optical fibers for long-distance high-speed communications are mostly step-index single-mode fibers formed of quartz glass as a basic material. The single mode optical fibers have ultra small diameters in a range of only 5 to 10μm and very difficult to align and connect during manufacturing process which in turn increase the cost. Meanwhile, the multi-mode fibers, having larger diameters than the single-mode ones, can be adopted for short-range communications. However, the high cost associated with the connections and its fragility hinder to the use of the multi-mode glass optical fibers for wide applications.

A metal line such as a twisted pair or a coaxial cable is usually used for short-range communications within 200m like LAN (Local Area Network) and delivers data up to 150Mbps. The metal line, however, does not satisfy the required data rate for ATM (Asynchronous Transfer Mode) applications in the year 2000s , which is 625 Mbps.

That is why much effort and research have been focused on the development of polymer optical fibers for short-range communications like LAN. A plastic optical fiber typically has a diameter larger than a glass optical fiber by 100 or more times, i.e. 0.5 to 1.0mm due to the flexibility of a polymer material used. The resulting benefits of easy alignment/connection and the availability of polymer connectors have remarkable reduced the cost.

The plastic optical fiber is configured in a step-index (SI) structure having stepwise refractive index variations in a radius direction, or in a graded-index (GI) structure having gradual refractive index variations in a radius direction. Due to the modal dispersion, the SI plastic optical fiber cannot deliver data faster than the metal line. On the other hand, the GI plastic optical fiber is more suitable for the short-range high-speed communication medium because its large diameter reduces the cost and its small modal dispersion leads to a higher data rate.

Traditionally, the GI plastic optical fiber can be fabricated in two ways. One is to draw an optical fiber from a refractive index-controlled preform, and the other is to continuously extrude polymers having different refractive indexes.

In the drawing method, a monomer or polymer is injected into a perform tube or a reactor and polymerized, thereby producing a clad having a predetermined refractive index in a central direction from the wall of the tube or reactor. In the same manner, a core material having a different refractive index is injected into the tube or reactor. Hence, the refractive index gradually increases or decreases from the periphery to the core center in the optical fiber product. However, it is not easy to freely control the refractive index distribution or achieve a continuously increasing or decreasing refractive index distribution in the drawing method. This difficulty is worsened if the refractive index control dopants are used.

In contrast, the exclusion method creates a gradual refractive index variation due to the diffusion at the boundary between a core and a clad during exclusion by continuously supplying a clad material having a predetermined refractive index and a core material having a different refractive index. The conventional method of fabricating a plastic optical fiber by the diffusion of polymers or dopants during extrusion is disclosed in U.S. Patent No. 5,593,621. The extrusion method also has the drawbacks of a slow extrusion speed and a process difficulty in freely controlling a refractive index distribution or achieving a continuously increasing or decreasing refractive index distribution.

A conventional optical fiber extrusion apparatus typically comprises a gas tank having a gas to apply pressure during the extrusion process, containers for storing a core material and a clad material, a crosshead for combining the core material with the clad material therein, a diffusion section in which diffusion occurs between a core and a clad, and a temperature controller.

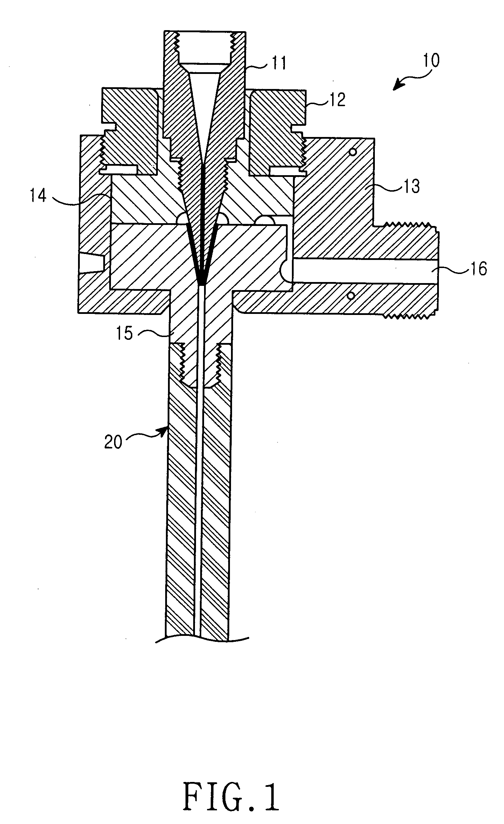

FIG. 1 is a view illustrating in detail a portion of the conventional optical fiber extrusion apparatus, especially a crosshead 10 and a diffusion section 20. The crosshead 10 comprises a core tube 11, a nut 12, a crosshead housing 13, and die holders 14 and 15. The crosshead 10 is configured so that a core material flows along the center of the diffuser 20, while a clad material is distributed around the core material. A core material melt is introduced into the crosshead 10 through the core tube 11. A clad material melt is then introduced into the crosshead 10 through a channel 16 formed in the housing 13 and combined with the core material melt. The diffusion section 20 is screwed to the die holder 15 by means of a screw. In the diffusion section 20, dopants included in the core and clad materials are diffused slowly, to create a gradual refractive index variation.

The diffusion section 20 must be designed to be at least 50cm long. To achieve a good refractive index distribution, it must be 100 to 400cm long. Consequently, the size of the extrusion apparatus is increased and a longer time is taken to extrude an optical fiber.

SUMMARY OF THE INVENTION

An object of the present invention is to substantially solve at least the above problems and/or disadvantages and to provide at least the advantages below. Accordingly, an object of the present invention is to provide an apparatus and method for fabricating a plastic optical fiber in which refractive index continuously varies radially from the center thereof.

Another object of the present invention is to provide an apparatus and method for fabricating a plastic optical fiber of which the refractive index distribution is freely controlled.

In accordance with an aspect of the present invention, in a plastic optical fiber fabricating apparatus, a first container separately contains refractive index control materials including at least a core material. The refractive control materials have different refractive indexes. A second container contains a clad material having a different refractive index from the core material. A crosshead flows down the refractive index control materials and the clad material introduced from the first and second containers by physical extrusion, while restricting the flow of the refractive index control materials and clad materials to a predetermined radius. A rotator mixes the extruded refractive index control and clad materials concentrically in perpendicular to an extrusion direction.

In accordance with another aspect of the present invention, in a method of fabricating a plastic optical fiber, one or more refractive control materials including at least a core material are continuously provided. Here, the refractive control materials have different refractive indexes. A clad material having a refractive index from the refractive index control materials are continuously provided around the refractive index control materials. The refractive index control materials and the clad material are extruded with a predetermined radius. The extruded refractive index control material and clad material are mixed concentrically in perpendicular to an extrusion direction. A plastic optical fiber is drawn from the mixture.

It is preferred that the rotator includes a nozzle engaged with the crosshead so that the nozzle is detachable and a rotational force supply for rotating the nozzle.

It is preferred that the core material is provided at a center and the other refractive index control materials are provided around the core material in the refractive index control material providing step. It is preferred that the clad material is a polymer obtained by polymerizing at least one monomer.

BRIEF DESCRIPTION OF THE DRAWINGS

The above and other objects, features and advantages of the present invention will become more apparent from the following detailed description when taken in conjunction with the accompanying drawings in which:

FIG. 1    is a view illustrating a conventional optical fiber extrusion apparatus, especially illustrating a crosshead thereof in detail;

FIG. 2    is a block diagram of an optical fiber extrusion apparatus according to an embodiment of the present invention;

FIG. 3    is a view illustrating a crosshead and a rotator in the optical fiber extrusion apparatus according to the embodiment of the present invention;

FIG. 4A    is a sectional view of a core-clad material combination, taken along line A-A' illustrated in FIG. 3;

FIG. 4B    is a sectional view of a produced plastic optical fiber, taken along line B-B' illustrated in FIG. 3;

FIG. 5    illustrates the refractive index profile of the plastic optical fiber illustrated in FIG 4B; and

FIG. 6    is a view illustrating the refractive index control principle of the present invention.

DETAILED DESCRIPTION OF THE PREFERRED EMBODIMENT

A preferred embodiment of the present invention will be described herein below with reference to the accompanying drawings. For the purposes of clarity and simplicity, well-known functions or constructions are not described in detail as they would obscure the invention in unnecessary detail.

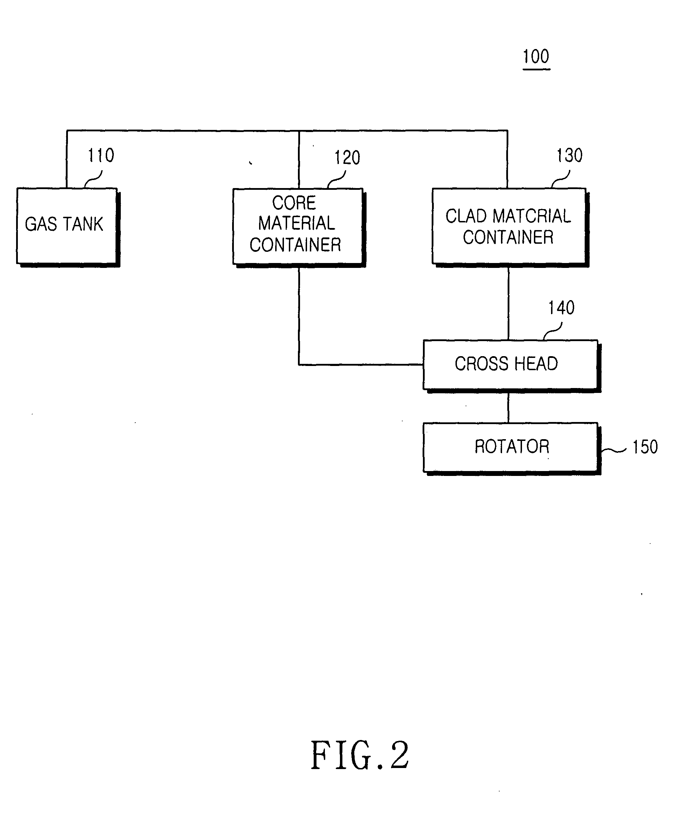

FIG. 2 is a block diagram of an optical fiber extrusion apparatus according to an embodiment of the present invention. As shown, an optical fiber extrusion apparatus 100 includes a gas tank 110, a core material container 120, a clad material container 130, a crosshead 140, and a rotator 150. While not shown, a flow controller for controlling the flow rates of a gas, a core material and a clad material, a filter, a temperature controller, a coater, and a winder are further included in the optical fiber extrusion apparatus.

The gas tank 110 contains a gas like nitrogen to apply pressure required for extrusion. The core material container 120 has one or more dopants or polymers having different refractive indexes in different vessels. The clad material container 130 contains a base polymer as a clad material. The crosshead 140 combines the core materials with the clad material such that the core-clad material combination has a predetermined radius. The rotator 150 rotates the core-clad material combination extruded from the crosshead 140 to diffuse the dopants or polymers.

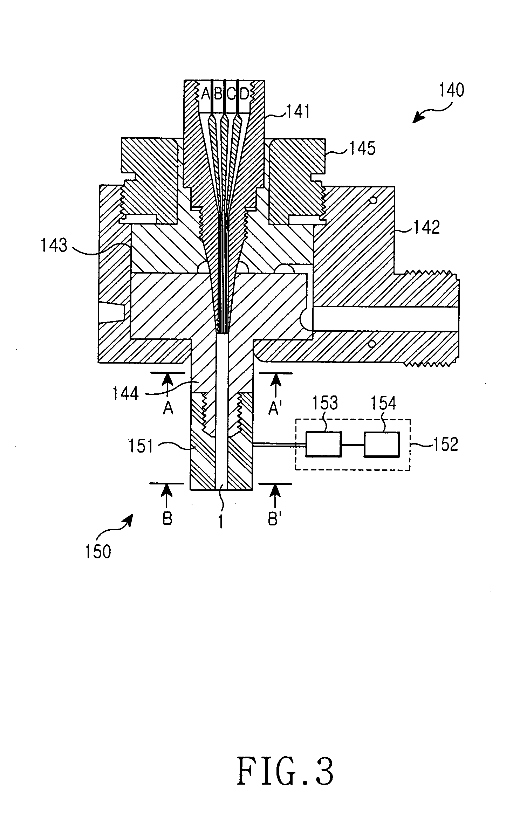

FIG. 3 illustrates a further detailed structure of the crosshead 140 and the rotator 150. As shown, the crosshead 140 comprises a core tube 141, a crosshead housing 142, and die holders 143 and 144. These components are engaged with one another by means of a nut 145. The core tube 141 may be partitioned into parts A, B, C and D to accommodate dopants or polymers having different refractive indexes. The rotator 150 comprises a nozzle 151 screwed under the die holder 144 so that it is detachable, and a rotational force supply 152 having a motor 153 for rotating the nozzle 151, and a motor controller 154.

In operation, the core materials are introduced into the crosshead 140 through the parts A, B, C and D of the core tube 141. The clad material is then introduced into the crosshead 140 through a channel formed in the crosshead housing 142 and then combined with the core materials. The core-clad material combination is passed through the nozzle 151 by screw force applied thereto. The nozzle 151 rotates concentrically in perpendicular to a direction in which the core and clad materials flow down, by use of the motor 153 and the motor controller 154. The mechanical concentric rotation diffuses or mixes the core and clad materials in a circumferential direction, thereby producing an optical fiber 1 having a continuous refractive index variation. Note that the refractive index distribution of the optical fiber 1 depends on the refractive indexes, compositions, and distribution densities of the core and clad materials, an extrusion speed, and the rotational speed of the nozzle 151.

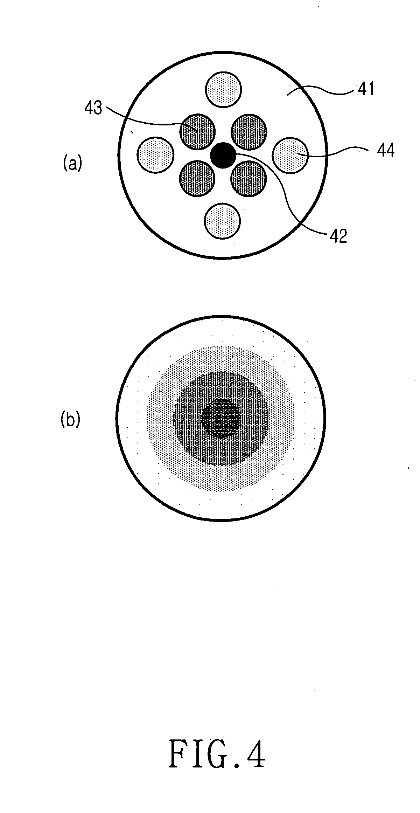

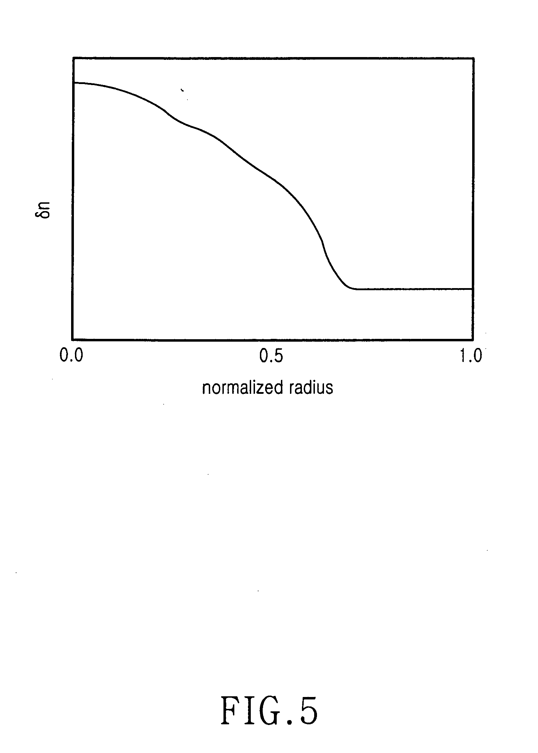

FIG. 4A is a sectional view of the core-clad material combination, taken along the line A-A' illustrated in FIG. 3, FIG. 4B is a sectional view of the produced optical fiber, taken along the line B-B' illustrated in FIG. 3, and FIG. 5 illustrates the refractive index profile of the optical fiber illustrated in FIG 4B. In FIG. 4A, reference numeral 41 denotes a base polymer as a clad material, and reference numerals 42, 43 and 44 denote polymers having different refractive indexes. From FIGs. 4A, 4B and 5, it is noted that the refractive index of the optical fiber 1 continuously varies through the mechanical diffusion or mixing caused by the rotation of the nozzle 51.

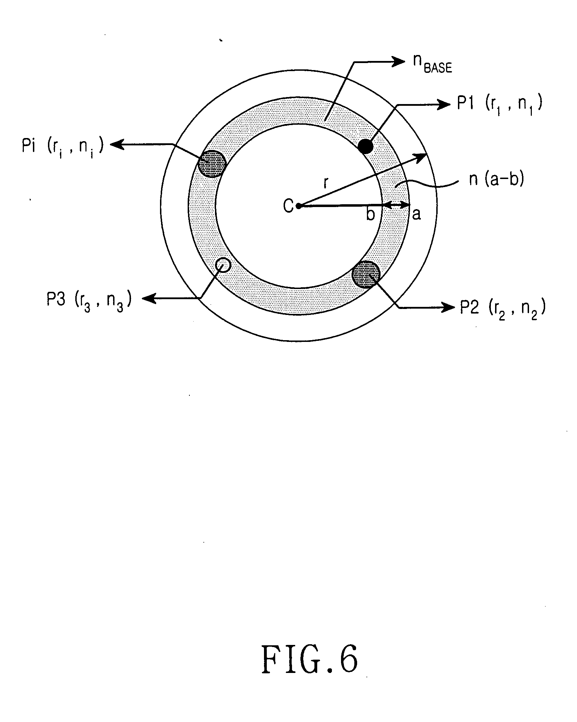

On the assumption that the A-A' section of the core-clad material combination introduced into the nozzle 151 has a structure illustrated in FIG. 6, the refractive index between an area having a distance "a" from a fiber center "C" and an area having a distance "b" from the fiber center C, n(a-b) is the average of the refractive indexes $n_1$, $n_2$, $n_3$ and $n_4$ of polymers $P_1$, $P_2$, $P_3$ and $P_i$ with which the refractive index of the optical fiber 1 is controlled can be expressed as:

$$[\pi(a^2 - b^2) - \pi(r_1^2 + r_2^2 + r_3^2 + r_i^2) \times n_{BASE}/\pi(a^2 - b^2)$$

$$+ \pi(n_1 r_1^2 + n_2 r_2^2 + n_3 r_3^2 + n_i r_i^2)/\pi(a^2 - b^2)$$

where $r_i$ is the radius of an ith refractive index control polymer.

Hence,

$$n(a - b) = n_{BASE} + \Sigma(n_i - n_{BASE})r_i^2/\pi(a^2 - b^2)$$

The above equation tells the arrangement or refractive indexes of the polymers required to achieve a desired refractive index profile. Typical available polymers and their refractive indexes are listed in Table 1, and typical available refractive index control materials and their refractive indexes are listed in Table 2. The materials are shown for illustrative purposes, and thus a variety of selections is available for the materials.

Table 1:

| (typical available polymer materials and their refractive indexes) | |
|---|---|
| Polymer | Refractive Index |
| poly-2,2,2-tryfluoroethyl ethacrylate | 1.4200 |
| poly methacrylate | 1.4920 |
| poly-4-methylcyclohexyl methacrylate | 1.4975 |
| polycyclohexyl methacrylate | 1.5066 |
| polyfurfuryl methacrylate | 1.5381 |
| poly-1-phenylrthyl methacrylate | 1.5487 |
| Poly-1-phenylcyclohexyl methacrylate | 1.5645 |
| polybezyl methacrylate | 1.5680 |
| polyphenyl methacrylate | 1.5706 |

Table 2:

| (typical available refractive index control materials and their refractive indexes) | |
|---|---|
| Refractive Index Control Material | Refractive Index |
| BBP, benzyl-n-butyl phthalate | 1.5400 |
| DBE, dibenzyl ether | 1.5620 |
| PT, phenoxy toluene | 1.5730 |
| 1,1 bis-(3,4,dimethylphenyl) | 1.5640 |
| DPS, diphenyl ether | 1.5790 |
| DP, biphenyl | 1.5870 |
| DPS, diphenyl sulfide | 1.6330 |
| DPM, diphenyl methane | 1.5770 |
| 1-methoxyphenyl-1-phenylethane | 1.5710 |
| benzyl benzoate | 1.5680 |
| Bromobenzene | 1.5570 |
| o-dichlorobenzene | 1.5510 |
| m-dichlorobenzene | 1.5430 |
| 1,2-dibromoethane | 1.5380 |
| 3-phenyl-1-propanol | 1.5320 |
| BzMA, benzyl methacrylate | 1.5670 |
| DOP, dioctyl phthalate | 1.4860 |

As described above, the plastic optical fiber fabricating apparatus of the present invention further includes the rotatable nozzle. The nozzle diffuses or mixes core and clad materials circumferentially. Therefore, an optical fiber having a continuous refractive index distribution can be fabricated and wound without any further diffusion after extrusion. As compared to the conventional plastic optical fiber fabricating apparatus, the present invention reduces an equipment size and shortens the fiber fabrication time. Also, the present invention facilitates the fabrication of an optical fiber having a continuously increasing or decreasing refractive index distribution and allows a refractive index at any position of the optical fiber to be freely controlled.

While the invention has been shown and described with reference to a certain preferred embodiment thereof, it will be understood by those skilled in the art that various changes in form and details may be made therein without departing from the spirit and scope of the invention as defined by the appended claims.

**Claims**

1. An apparatus for fabricating a plastic optical fiber, comprising:

   a first container for separately containing refractive index control materials including at least a core material, the refractive control materials having different refractive indexes;
   a second container for containing a clad material having a different refractive index from the core material;
   a crosshead for receiving and extruding the refractive index control materials and the clad material introduced from the first and second containers in a downward direction, the flow of the refractive index control materials and clad materials being restricted to a predetermined radius; and
   a rotator for mixing the extruded refractive index control and clad materials concentrically in perpendicular to an extrusion direction.

2. The apparatus of claim 1, wherein the crosshead comprises:

   a core tube for receiving the respective refractive index control materials;
   a crosshead housing having a channel formed therein for allowing the clad material to be injected therethrough; and
   a die holder for restricting the flow of the refractive index control and clad materials to the predetermined radius.

3. The apparatus of claim 2, wherein the rotator comprises:

   a nozzle detachably engaged with the crosshead; and
   a rotational force supply for rotating the nozzle.

4. The apparatus of claim 4, wherein the nozzle is up to 50cm long.

5. A method of fabricating a plastic optical fiber, comprising the steps of:

   continuously providing one or more refractive control materials including at least a core material, the refractive control materials having different refractive indexes;
   continuously providing a clad material having a refractive index from the refractive index control materials around the refractive index control materials;
   extruding the refractive index control materials and the clad material at a predetermined radius;
   mixing the extruded refractive index control material and clad material concentrically in perpendicular to an extrusion direction; and
   drawing a plastic optical fiber from the mixture.

6. The method of claim 5, wherein the core material is provided at a center and the other refractive index control materials are provided around the core material in the refractive index control material providing step.

7. The method of claim 5, wherein the clad material is a polymer obtained by polymerizing at least one monomer.

8. The method of claim 5, wherein a refractive index n(a-b) between an area spaced from the center of the plastic optical fiber by "a" and an area spaced from the center of the plastic optical fiber by "b" (a≥b) is expressed as

$$n(a - b) = n_{BASE} + \Sigma(n_i - n_{BASE})r_i^2/\pi(a^2 - b^2)$$

wherein n; represents the refractive index of an ith refractive index control material, $r_i$ represents the radius of the ith refractive index control material, and $n_{BASE}$ represents the refractive index of the clad material.

9. An apparatus for fabricating a plastic optical fiber, comprising:

a core material container for containing a core material;
a clad material container for containing a clad material having a different refractive index from the core material;
a crosshead for receiving and extruding the core material and the clad material introduced from the containers, the flow of the core and clad materials being restricted to a predetermined radius; and
a rotator for mixing the extruded core and clad materials concentrically in perpendicular to an extrusion direction.

**10.** An apparatus for fabricating a plastic optical fiber, comprising:

a core material container for containing a core material;
a refractive index control material for containing a refractive index control material by which the refractive index of a core is controlled;
a clad material container for containing a clad material having a different refractive index from the core material;
a crosshead for receiving and extruding the core material, the refractive index control material, and the clad material introduced from the containers, the flow of the core, refractive index control, and clad materials being restricted to a predetermined radius; and
a rotator for mixing the extruded core, refractive index control, and clad materials concentrically in perpendicular to an extrusion direction.

FIG.1

100

110
GAS TANK

120
CORE MATERIAL CONTAINER

130
CLAD MATCRIAL CONTAINER

140
CROSS HEAD

150
ROTATOR

# FIG.2

FIG.3

FIG.4

FIG.5

FIG.6

# EP 1 536 255 A1

**European Patent Office**

## EUROPEAN SEARCH REPORT

Application Number

EP 04 01 7182

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 2002/031318 A1 (CHO HAN SOL ET AL) 14 March 2002 (2002-03-14) * paragraph [0029] - paragraph [0033]; claims 1,29; figure 5; example 1 * ----- | 1-10 | G02B6/16 B29D11/00 C03B37/02 |
| A | EP 1 057 617 A (LUCENT TECHNOLOGIES INC) 6 December 2000 (2000-12-06) * paragraph [0043] - paragraph [0050]; claims 1,14; figures 1A,1B,12 * ----- | 1-10 | |
| A,D | US 5 593 621 A (NIHEI RYO ET AL) 14 January 1997 (1997-01-14) * claim 1; figures 1,5 * ----- | 1-10 | |
| A | US 2002/037145 A1 (MIYAKE SHIORI ET AL) 28 March 2002 (2002-03-28) * figures 3A,3B * ----- | 1-10 | |
| A | US 2002/041042 A1 (LEE BONGSOO ET AL) 11 April 2002 (2002-04-11) * paragraphs [0080] - [0083]; figure 5 * ----- | 1-10 | TECHNICAL FIELDS SEARCHED (Int.Cl.7) G02B B29D C03B |

The present search report has been drawn up for all claims

| Place of search | Date of completion of the search | Examiner |
|---|---|---|
| Munich | 14 September 2004 | González-Junquera, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 536 255 A1**

### ANNEX TO THE EUROPEAN SEARCH REPORT
### ON EUROPEAN PATENT APPLICATION NO.

EP 04 01 7182

This annex lists the patent family members relating to the patent documents cited in the above-mentioned European search report.
The members are as contained in the European Patent Office EDP file on
The European Patent Office is in no way liable for these particulars which are merely given for the purpose of information.

14-09-2004

| Patent document cited in search report | | | Publication date | Patent family member(s) | | | Publication date |
|---|---|---|---|---|---|---|---|
| US 2002031318 | A1 | | 14-03-2002 | KR | 2002010349 | A | 04-02-2002 |
| | | | | JP | 2002107551 | A | 10-04-2002 |
| EP 1057617 | A | | 06-12-2000 | US | 6254808 | B1 | 03-07-2001 |
| | | | | AU | 3535900 | A | 30-11-2000 |
| | | | | BR | 0002427 | A | 02-01-2001 |
| | | | | CA | 2308661 | A1 | 27-11-2000 |
| | | | | CN | 1275479 | A | 06-12-2000 |
| | | | | EP | 1057617 | A2 | 06-12-2000 |
| | | | | JP | 2000356716 | A | 26-12-2000 |
| US 5593621 | A | | 14-01-1997 | DE | 69331093 | D1 | 13-12-2001 |
| | | | | DE | 69331093 | T2 | 14-03-2002 |
| | | | | EP | 0615141 | A1 | 14-09-1994 |
| | | | | WO | 9404949 | A1 | 03-03-1994 |
| | | | | JP | 3471015 | B2 | 25-11-2003 |
| US 2002037145 | A1 | | 28-03-2002 | AU | 7462101 | A | 08-01-2002 |
| | | | | EP | 1310807 | A1 | 14-05-2003 |
| | | | | WO | 0201261 | A1 | 03-01-2002 |
| | | | | TW | 556006 | B | 01-10-2003 |
| US 2002041042 | A1 | | 11-04-2002 | AU | 5341201 | A | 30-10-2001 |
| | | | | CN | 1444520 | T | 24-09-2003 |
| | | | | EP | 1272336 | A2 | 08-01-2003 |
| | | | | JP | 2003531394 | T | 21-10-2003 |
| | | | | WO | 0178972 | A2 | 25-10-2001 |

EPO FORM P0459

For more details about this annex : see Official Journal of the European Patent Office, No. 12/82